# EUROPÄISCHE PATENTSCHRIFT

(11) **EP 0 356 636 B1**
(45) Veröffentlichungstag und Bekanntmachung des Hinweises auf die Patenterteilung: **15.02.1995**
(21) Anmeldenummer: 89110651.0
(22) Anmeldetag: 13.06.1989
(51) Int. Cl.: B23Q 3/16

(54) **Einzugskraft-Messgerät für Werkzeug-Spannvorrichtungen**
Pulling force measuring device for tool-clamping devices
Dispositif pour mesurer la force de tirage pour les moyens de serrage d'outil

(30) Priorität: 02.09.1988 DE 3829846
(43) Veröffentlichungstag der Anmeldung: 07.03.1990
(73) Patentinhaber: KELCH GMBH + CO., D-73614 Schorndorf (DE)
(72) Erfinder:
(74) Vertreter: Patentanwälte Ruff, Beier, Schöndorf und Mütschele

(56) Entgegenhaltungen:
- EP-A- 0 074 524
- EP-A- 0 221 802
- PATENT ABSTRACTS OF JAPAN, Band 8, Nr. 120 (M-300)[1557], 6. Juni 1984;& JP-A-59 24 944 (YAMAZAKI) 08-02-1984

## Beschreibung

Die Erfindung betrifft ein Meßgerät nach dem Oberbegriff des Patentanspruches 1. Solche Meßgeräte sind insbesondere an Werkzeugmaschinen vorgesehen, welche eine Aufnahme für den zu spannenden Bauteil und ein Spannglied zur Spannung dieses Bauteiles an der Aufnahme aufweisen. Zur Erzielung eines günstigen Meßvorgangs kann das Meßgerät einen an die Aufnahme der Werkzeugmaschine oder dgl. angepaßten bzw. entsprechend der zu verwendenden Bauteil-Schäfte ausgebildeten Prüfschaft aufweisen, der vorzugsweise mit einem von der Spannkraft des Spanngliedes beeinflußbaren Spannkraft-Meßglied versehen ist.

Der Grad der Belastbarkeit von Werkzeugen, insbesondere von Zerspanungswerkzeugen, ist maßgeblich für die Leistungsfähigkeit von Werkzeugmaschinen und wesentlich abhängig von der Sitzgenauigkeit und Sitzfestigkeit des Werkzeugschaftes in der Maschinenspindel. Diese wiederum wird wesentlich beeinflußt von der Einzugskraft, da bei zu niedriger Einzugskraft Vibrationen mit der Folge kürzerer Standzeiten, schlechterer Bearbeitungs-Oberflächen und ungenauerer Bearbeitungs-Passungen auftreten können. Auch Beschädigungen der Maschine können, insbesondere bei radialer Beanspruchung des Werkzeugschaftes auftreten, nämlich z.B. Passungsrost zwischen der Spindel und dem Werkzeugschaft.

Nicht nur im Falle einer mit der Spindel-Werkzeugaufnahme zusammenarbeitenden vollautomatischen Werkzeugwechsel-Einrichtung, sondern auch im Falle des Werkzeugwechsels von Hand wird der Werkzeugschaft, der meist zur Zentrierung und axialen Abstützung gegenüber der als Innenkonus ausgebildeten Werkzeugaufnahme einen Steilkegel aufweist, mechanisch z.B. über eine innerhalb der Maschinenspindel liegende Zugstange eingezogen. Die Spannkraft kann ebenfalls über mechanische Spannglieder, z.B. ein Tellerfederpaket, aufgebracht werden, während das Lösen bzw. Aufheben der Spannkraft über ein hydraulisches Arbeitsglied erfolgt. Beschädigungen in der Spannvorrichtung, z.B. Brüche von Tellerfedern, veränderte Federwege und ähnliches, sind von außen meist nicht erkennbar, können jedoch zu einem beträchtlichen Absinken der Spannkraft führen. Auch andere Spannvorrichtungen, z.B. hydraulische, elektrische und ähnliche, sollen gemessen werden können.

Ein Einzugskraft-Meßgerät könnte z.B. ein hydraulisches, in einer Kraftmeßdose eingeschlossenes Meßglied bzw. ein Membran-Meßsystem aufweisen, an dessen den Prüfschaft im vorderen Bereich umschließendes Gehäuse ein vom Meßglied beeinflußtes Anzeigeorgan angebracht ist. Ein derartiges Meßgerät könnte einen relativ großen Meßweg von beispielsweise etwa 1 mm haben. Durch einen solchen Meßweg, der sich aufgrund der beweglichen Lagerung des mit dem Maschinen-Spannglied in Eingriff zu bringenden Anzugsbolzens gegenüber dem an der Werkzeugaufnahme abgestützten Prüfschaft ergibt, könnte das Meßergebnis bzw. der Meßwert verfälscht werden, zumal wenn der Anzugsbolzen des zur Werkzeugspannung zu verwendenden Werkzeugschaftes starr bzw. einteilig an diesem angeordnet wäre.

Die Verfälschung kann sich z.B. aufgrund der wegabhängigen Spannkraft-Kennlinie der Maschinen-Spannvorrichtung ergeben, die im Falle der Aufbringung der Spannkraft durch ein Tellerfederpaket z.B. eine Federkennlinie ist. Ein weiterer Nachteil einer solchen Ausbildung würde auch darin bestehen, daß sie praktisch nicht auf unterschiedlich große Steilkegel umzustellen wäre und daß ihre Meßtoleranz mit abnehmenden Spannkräften zunimmt, so daß sich eine um so ungenauere Messung ergibt, je geringer die Soll-Spannkräfte sind.

Nach der JP-A-59-24944 ist ein Einzugskraft-Meßgerät bekannt geworden, bei dem der Meßwert für die Spannung der Spannvorrichtung vom Fluid-Druck eines Hydraulik-Mediums abgeleitet wird, welches unmittelbar über die Zugstange und einen an dieser befestigten Kolben beeinflußt wird.

Der Erfindung liegt des weiteren die Aufgabe zu Grunde, Nachteile bekannter Meßgeräte zu vermeiden, insbesondere ein Einzugskraft-Meßgerät der genannten Art zu schaffen, das bei einfachem Aufbau einen möglichst geringen Meßweg bzw. einen solchen Meßweg hat, der dem Anzugsweg des Anzugsbolzens der zu spannenden Werkzeugschäfte etwa gleich ist.

Zur Lösung dieser Aufgabe sind die Merkmale des Patentanspruches 1 vorgesehen. Z.B. kann ein Meßglied zweckmäßig durch einen als Festkörper ausgebildeten Meßkörper gebildet sein, der die Spannkraft unter mechanischer Verformung aufnimmt, wobei von dieser Verformung der Meßwert abgeleitet wird. Zu diesem Zweck wird der Meßkörper vorteilhaft hinsichtlich des Verhältnisses zwischen seiner Verformung und der Spannkraft geeicht. Der Meßkörper, der zweckmäßig aus einem metallischen Werkstoff, wie Stahl, besteht, ist vorteilhaft so bemessen, daß er nur weit unterhalb der Streckgrenze im elastischen Bereich verformt wird, wobei auch eine Druck- oder Biegeverformung denkbar, jedoch eine Zugverformung einbezogen ist. Zweckmäßig besteht der Meßkörper aus einem härtbaren Werkzeugstahl, z.B. einem Mangan-Chrom-Stahl, wie 16MnCR5.

Statt der beschriebenen Ausbildung, insbesondere aber zusätzlich hierzu, kann die erfindungsgemäße Aufgabe auch dadurch gelöst werden, daß der Anzugsbolzen in Spannrichtung starr bzw. formschlüssig mit denjenigen Teilen des Prüfschaftes verbunden ist, die unter der Spannkraft an der Maschinenspindel abzustützen und in der Regel ausschließlich durch den Steilkegel gebildet sind. Dadurch wird der Anzugsbolzen bei der Einzugskraft-Messung gegenüber dem Steilkegel allenfalls um ein äußerst geringes, der Spannkraft-Zugdehnung des Meßkörpers entsprechendes Maß lageverändert, so daß sich ein gegen Null gehender Meßweg ergibt, der wesentlich kleiner als ein Hundertstel Millimeter sein kann.

Der Meßkörper kann durch die erfindungsgemäße Ausbildung ein Längsabschnitt des Prüfschaftes sein, der in seinem Bereich praktisch den Außenumfang des Prüfschaftes bildet und mit diesem als einstückiger Bauteil ausgebildet sein kann. Dadurch ergibt sich ein äußerst einfacher, im wesentlichen einteiliger Aufbau des gesamten Prüfschaftes ggf. einschließlich des Meßkörpers aus durchgehend demselben Werkstoff.

Der Meßkörper ist zweckmäßig in seiner Außenweite gegenüber dem mittleren Durchmesser des Steilkegels, vorzugsweise mindestens etwa um die Hälfte, reduziert, wobei der Meßkörper zwischen dem Steilkegel und dem Anzugsbolzen des Prüfschaftes zweckmäßig denjenigen Längsabschnitt bildet, der die kleinsten Querschnitte hat, so daß praktisch nur er unter der Spannkraft einer Längendehnung unterworfen wird und diese sehr gut erfaßt werden kann. Der Meßkörper liegt des weiteren vorteilhaft verhältnismäßig weit vom Anzugsbolzen entfernt und sehr nahe beim Steilkegel des Prüfschaftes in einem Bereich, in welchem der Prüfschaft im Innern allenfalls von einer glattflächigen Bohrung, nicht aber von einer Gewindebohrung oder dgl., begrenzt ist. Der nach vorne bis zum Steilkegel und/oder der nach hinten bis zum hinteren Ende des Prüfschaftes an den Meßkörper anschließende Schaftbereich weist zweckmäßig konstante Außendurchmesser auf, so daß der Meßkörper praktisch durch einen Längsabschnitt des hinter dem Steilkegel liegenden Schaftteiles gebildet ist, der gegenüber diesem Schaftteil im Querschnitt bzw. im Außendurchmesser geringfügig geschwächt bzw. reduziert ist.

Dies kann dadurch erfolgen, daß der Meßkörper gegenüber dem übrigen Schaftabschnitt durch eine flache Umfangsnut abgesetzt ist.

Zur genauen Erfassung und Darstellung der Verformung des Meßkörpers als Meßwert ist ein Meßwertwandler vorgesehen, der vorzugsweise unmittelbar am Meßkörper, insbesondere an dessen Außenfläche so z.B. haftend angebracht ist, daß er den Verformungen des Meßkörpers gleichlaufend unterworfen ist. Dieser Meßwertwandler ist bevorzugt durch mindestens einen Dehnmeßstreifen gebildet, wobei vorzugsweise mehrere Dehnmeßstreifen so angebracht sind, daß einer oder mehrere aufgrund der Dehnungen Widerstandsänderungen unterworfen sind, während einer oder mehrere keinen solchen Widerstandsänderungen unterworfen, jedoch in gemeinsamer elektrischer Schaltung mit den zuerst genannten, aktiven Dehnmeßstreifen angeordnet sind. Dies kann z.B. in einer Vollbrückenschaltung so erfolgen, daß zwei Dehnmeßstreifen einander diametral gegenüberliegend achsparallel zum Meßkörper aktiv und axial benachbart zu diesen zwei Dehnmeßstreifen in Umfangsrichtung im wesentlichen inaktiv angeordnet sind, wobei jeweils in der elektrischen Verbindungsbrücke zwischen einem aktiven und einem diametral gegenüberliegenden inaktiven Dehnmeßstreifen eine der beiden Zuleitungen für die Speisespannung angeschlossen ist, während in den beiden anderen elektrischen Verbindungsbrücken zwischen den beiden jeweils axial hintereinander liegenden Dehnmeßstreifen jeweils eine der beiden Signalleitungen zur Weiterleitung des elektrischen, zur Einzugskraft proportionalen Meßsignales, angeschlossen ist. Die Vollbrücke weist zweckmäßig einen Widerstandswert in der Größenordnung von 350 ohm auf, wobei sie mit einer Niederspannung in der Größenordnung von 10 Volt betrieben wird. Beträgt der Meßbereich z.B. 40 kN, so entsprechen diese zweckmäßig etwa 0,75 mV/V, während bei einem Meßbereich von z.B. 25 kN dieser Wert ebenfalls etwa 0,75 mV/V mit einer Toleranz in der Größenordnung von 1 % oder sogar höchstens 0,5 % entspricht. Die Sicherheit gegen Überlastung der Meßelektronik liegt zweckmäßig in der Größenordnung des Zweieinhalbfachen der Nennbelastung.

Elektrische Anschlußleitungen für wenigstens einen Meßwertwandler können in einfacher Weise im wesentlichen innerhalb des Prüfschaftes verlegt sein, der zweckmäßig am vorderen, außerhalb der Maschinenspindel liegenden Ende einen mit diesen Anschlußleitungen elektrisch verbundenen Anschlußstecker, wie einen Flanschstecker, trägt, der z.B. im wesentlichen versenkt in eine Stirnbohrung des Prüfschaftes eingesetzt ist. Dadurch kann der Prüfschaft über eine flexible Leitung lösbar mit einem Anzeigegerät verbunden werden bzw. leicht handhabbar zunächst ohne die Verbindung mit diesem Anzeigegerät in die Maschinenspindel eingesetzt werden.

Das durch den Anzugsbolzen gebildete Eingriffsglied für das Spannglied der Maschine ist zweckmäßig auswechselbar am Prüfschaft angeordnet, so daß der Prüfschaft durch Auswechseln des Anzugsgliedes bzw. Anzugsbolzens an unterschiedliche Maschinen-Einzugssysteme angepaßt werden kann.

Durch die erfindungsgemäße Ausbildung ist ein elektronisches Meßsystem zur Messung der Einzugskraft von Spindel-Spanneinrichtungen geschaffen, dessen Meßkörper durch einen Präzisions-Kraftmeßstab mit Präzisions-Dehnungsmeßstreifen gebilnet ist. Durch kodierte Stecker am Prüfschaft kann eine automatische Meßbereichsumschaltung der Erfassungs- bzw. Anzeigeeinrichtung erfolgen, was jedoch auch durch manuelle Umschaltung an der Auswertelektronik des Anzeigegerätes erfolgen kann. Die erfindungsgemäße Ausbildung ist z.B. für die Steilkegelgrößen 30, 40, 45, 50 und 60 geeignet, wobei dann die Meßbereiche in derselben Reihenfolge zweckmäßig etwa bei 15, 25, 30, 60 und 100 kN liegen.

Das Meßgerät kann auch Bestandteil eines Koffers und erst nach dessen Öffnen zugänglich sein, Neben dem Meßgerät nimmt der Koffer noch einen oder mehrere Prüfdorne, Anzugsbolzen etc. auf.

Diese und weitere Einzelheiten von bevorzugten Weiterbildungen der Erfindung gehen außer aus den Ansprüchen auch aus der Beschreibung und den Zeichnungen hervor. Ausführungsbeispiele der Erfindung sind in den Zeichnungen dargestellt und werden im folgenden näher erläutert. In den Zeichnungen zeigen:
- Fig. 1: ein erfindungsgemäßes Einzugskraft-Meßgerät im wesentlichen in schematischer Darstellung,
- Fig. 2: den Grundkörper des Prüfschaftes gemäß Fig. 1 in geringfügig abgewandelter Ausbildung,
- Fig. 3: ein Spannglied-Eingriffsglied für die auswechselbare Verbindung mit dem Prüfschaft in Ansicht,
- Fig. 4: ein weiteres Eingriffsglied in einer Darstellung entsprechend Fig. 3,
- Fig. 5: den Prüfschaft gemäß Fig. 2 in Axialansicht,
- Fig. 6: eine weitere Ausführungsform eines Prüfschaftes teilweise im Axialschnitt,
- Fig. 7: die elektrische Schaltung der Meßwertwandler des Prüfschaftes gemäß Fig. 6 und
- Fig. 8: eine weitere Ausführungsform eines Prüfschaftes, teilweise im Axialschnitt.

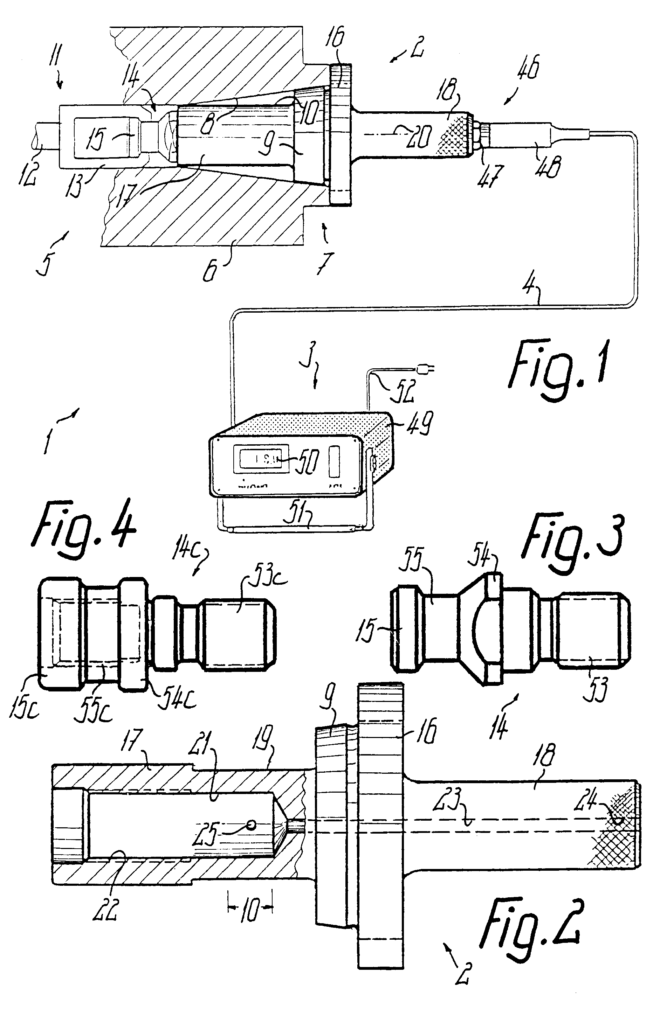

Das Meßgerät 1 gemäß Fig. 1 ist dafür vorgesehen, mit einem über eine flexible Leitungsverbindung 4 leicht lösbar an eine Erfassungseinrichtung 3 anzuschließenden Prüfschaft 2 in die Werkzeugaufnahme 7 einer mit einer Werkzeug-Spannvorrichtung 5 versehenen Arbeitsspindel 6 einer Werkzeugmaschine, z.B. einer Fräsmaschine, eingesetzt zu werden. Zur auswechselbaren Aufnahme von Werkzeugschäften weist die Arbeitsspindel 6 an ihrem vorderen Ende einen in ihrer Achse liegenden Innenkonus 8 auf, an welchen ein Steilkegel 9 des Prüfschaftes so angepaßt ist, daß dieser Steilkegel 9 im wesentlichen gleich ausgebildet und enger toleriert ist als diejenigen der zu verwendenden Werkzeugschäfte, wobei der Steilkegel 9 des Prüfschaftes 2 demgegenüber auch wesentlich kürzer sein kann, nämlich insbesondere dem vorderen, weiteren Endabschnitt der Steilkegel der Werkzeugschäfte entspricht und nach hinten nicht über die gesamte Länge des Innenkonus 8 reicht.

Der im wesentlichen über seine gesamte Lange einteilige Prüfschaft 2 bildet einen einteilig mit dem Steilkegel 9 ausgebildeten Meßkörper 10 in Form eines kurzen Zugabschnittes bzw. Zugstabes, dessen für die Ermittlung des Meßwertes wirksame Längserstreckung wesentlich kleiner als seine Außenweite bzw. sein Außendurchmesser, insbesondere kleiner als die Hälfte davon sein kann.

Der Prüfschaft 2 ist in gleicher Weise wie die zu verwendenden Werkzeugschäfte dafür ausgebildet, innerhalb der Arbeitsspindel 6 mit einem Spannglied 11 der Spannvorrichtung 5 zugfest bzw. formschlüssig gekuppelt zu werden, wobei dieses Spannglied 11 z.B. eine in der Spindelachse liegende Zugstange 12 und an deren vorderen Ende einen zum Greifen aus einer Schließstellung spreizbaren Spanngreifer 13 aufweist, der zur formschlüssigen Verbindung mit einem am hinteren Ende des Prüfschaftes 2 in gleicher Weise wie an den Werkzeugschäften vorgesehenen Eingriffsgliedes 14 ausgebildet ist. Die in Bezug auf die Verbindung mit dem Spanngreifer 13 wirksamen Flächen des Eingriffsgliedes 14 sind gegenüber dem Steilkegel 9 zweckmäßig in gleicher, jedoch enger tolerierter Bemessung wie bei den Werkzeug- schäften vorgesehen, wobei das Toleranzfeld etwa in der Mitte der Toleranzgrenzen der Werkzeugschäfte liegt.

Das Eingriffsglied 14 kann durch einen auswechselbar in das hintere Ende des Prüfschaftes 2 zugfest eingesetzten Anzugsbolzen 15 gebildet sein, damit er zur Anpassung des Prüfschaftes 2 an den jeweils vorhandenen Spanngreifer 13 durch einen geeigneten Anzugsbolzen 15 ersetzt werden kann. Um die Zugstange 12 ist z.B. ein nicht näher dargestelltes Tellerfederpaket aus einer Vielzahl von Tellerfedern angeordnet, das sich mit seinem hinteren Ende an einem Bund der Zugstange 12 und am vorderen Ende gegenüber einer Schulter der Maschinenspindel 6 vorgespannt abstützt, wobei hinter dem Tellerfederpaket ein Auslösemechanismus für die Spannvorrichtung 5 vorgesehen, beispielsweise die Zugstange 12 durch die Kolbenstange eines Arbeitszylinders gebildet ist, mit welchem der Greifer 13 entgegen der Kraft des Tellerfederpaketes nach vorne geschoben werden kann, bis er durch Spreizen von dem Anzugsbolzen 15 lösbar ist.

Der Prüfschaft 2 kann des weiteren in gleicher Weise wie die zu verwendenden Werkzeugschäfte benachbart zum vorderen Ende des Steilkegels 9 einen über dessen Außenumfang vorstehenden Schaftflansch 16 mit Umfangsnuten für den Eingriff von Mitnehmersteinen der Arbeitsspindel 6 aufweisen. Es ist denkbar, den Prüfschaft 2 gegenüber der Werkzeugaufnahme 7 so zu bemessen, daß der Schaftflansch 16 bei eingezogenem Prüfschaft 2 mit seiner hinteren Stirnfläche an einer bzw. der vorderen Stirnfläche der Arbeitsspindel 6 abgestützt ist und dadurch die Spannkräfte der Spannvorrichtung 5 aufnimmt, wobei dann der Steilkegel 9 im wesentlichen nur zur Zentrierung des Prüfschaftes 2 gegenüber der Arbeitsspindel 6 dient. Als Zentrierung könnte bei Arbeitsspindeln mit zylindrischer Aufnahmebohrung auch eine Zylinderfläche statt des Steilkegels dienen. Zusätzlich hierzu, insbesondere aber statt dessen, ist es vorteilhaft, wenn der Prüfschaft 2 so bemessen ist, daß die Spannkräfte im wesentlichen nur von dem Steilkegel 9 aufgenommen werden, so daß im eingezogenen Zustand der Schaftflansch 16 entweder mit geringem Abstand vor dem vorderen Ende der Arbeitsspindel 6 liegt oder kein über den Außenumfang des Steilkegels 9 vorstehender Schaftflansch überhaupt vorgesehen ist.

An das hintere Ende des Steilkegels 9, dessen Längserstreckung zweckmäßig etwa zwischen der Hälfte und einem Sechstel, vorzugsweise etwa einem Fünftel der Längserstreckung des Innenkonus 8 entspricht, schließt sich ein bis zum hinteren Ende des Prüfschaftes 2 bzw. zum Eingriffsglied 14 erstreckender Schaftabschnitt 17 an, der im wesentlichen durchgehend zylindrischen Außenumfang und einen Außendurchmesser aufweist, der geringfügig kleiner als der kleinste Innendurchmesser des Innenkonus 8 ist. Der Schaftabschnitt 17 kann vor und/oder hinter dem Meßkörper 10 auch eine von der zylindrischen Form abweichende Form aufweisen. Im eingesetzten Zustand erstreckt sich dieser Schaftabschnitt 17 über den größten Teil der Länge des Innenkonus 8. Am vorderen, aus der Arbeitsspindel 6 herausragenden Ende weist der Prüfschaft 2 einen zweckmäßig ebenfalls in der Schaftachse 20 liegenden vorderen Fortsatz in Form vorzugsweise eines im wesentlichen zylindrischen Griffschaftes 18 auf, dessen Außenumfang gerändelt, gekordelt oder in ähnlicher Weise gerauht sein kann. Der Außendurchmesser des Griffschaftes 18 kann in der Größenordnung des Außendurchmessers des Schaftabschnittes 17 liegen. Der Griffschaft 18 bildet eine einteilige Fortsetzung des Schaftabschnittes 17 und schließt an die vordere Stirnseite des Steilkegels 9 bzw. des Schaftflansches 16 an.

In Fig. 2 ist der Steilkegel 9 als weitere Ausführungsform wesentlich kürzer als in Fig. 1 dargestellt, jedoch wird bei hohen Einzugskräften zur Vermeidung zu hoher Flächendrücke eine längere Ausbildung bevorzugt. Wie Fig. 2 zeigt, weist der Schaftabschnitt 17 eine flache Umfangsnut 19 auf, die auch durch zwei oder mehr gleichmäßig über den Umfang verteilte, axialschlitzförmige Vertiefungen oder dgl. gebildet sein könnte und zweckmäßig eine Tiefe in der Größenordnung von etwa 4 mm hat. Durch die Umfangsnut 19 ist ein zylindrischer, im Außendurchmesser gegenüber dem übrigen Schaftabschnitt 12 reduzierter Schaftteil gebildet, der im dargestellten Ausführungsbeispiel bis an die hintere Stirnfläche des Steilkegels 9 reicht, wobei sein Außenumfang im Querschnitt konkav ausgerundet in diese Stirnfläche übergeht, um Kerbwirkungen zu vermeiden. Wiederum nur ein von beiden Enden dieses Schaftteiles Axialabstand aufweisender Längsabschnitt bildet den wirksamen Meßkörper 10, der durch eine ihn in der Schaftachse 20 durchsetzende Schaftbohrung 21 hohl bzw. rohrförmig ausgebildet ist und zweckmäßig eine Wandungsdicke in der Größenordnung von 5 mm hat. Die Schaftbohrung 21, deren Durchmesser in der Größenordnung der Hälfte des Außendurchmessers des Schaftabschnittes 17 liegt, ist im wesentlichen als zum hinteren Ende des Schaftabschnittes 17 offene Sacklochbohrung ausgebildet, die nach vorne vorteilhaft wenigstens über das vordere Ende des Meßkörpers 10 hinausreicht und bis an die hintere Stirnfläche des Steilkegels 9 bzw. darüberhinaus nach vorne reichen kann, so daß wenigstens im Bereich des Meßkörpers 10 sowie beiderseits benachbart dazu im wesentlichen konstante Material querschnitte gegeben sind.

Das hintere Ende der Schaftbohrung 21 ist als, die Schaftbohrung 21 als Kernbohrung aufweisende Gewindebohrung 22 ausgebildet, die am hinteren Ende des Schaftabschnittes 17 in einen geringfügig über den Gewindeaußendurchmesser erweiterten Bohrungsabschnitt für die Aufnahme eines Zentrierbundes des Eingriffsgliedes 14 übergeht.

Am vorderen Ende geht die Schaftbohrung 21 in eine Axialbohrung 23 wesentlich kleineren Durchmessers über, die annähernd bis zum vorderen Ende des Prüfschaftes 2 bzw. des Griffschaftes 18 reicht und an diesem vorderen Ende zweckmäßig für die Aufnahme eines elektrischen Anschlußsteckers als Steckerbohrung 24 ausgebildet ist, die gleichen oder größeren Durchmesser als die Axialbohrung 23 hat.

Vom Boden der Umfangsnut 19 bzw. vom Außenumfang des zugehörigen Schaftteiles führt mindestens eine, führen insbesondere zwei oder mehr gleichmäßig über den Umfang verteilte Radialbohrungen 25 in die Schaftbohrung 21, wobei diese Radialbohrungen 25 axial gegeneinander versetzt oder bevorzugt in einer gemeinsamen Querebene vorgesehen sein können. Im dargestellten Ausführungsbeispiel sind die Radialbohrungen 25 im Bereich des Meßkörpers 10 vorgesehen, jedoch befinden sie sich bevorzugt hinter und/oder vor dem diesen Meßkörper 10 bildenden Längsabschnitt.

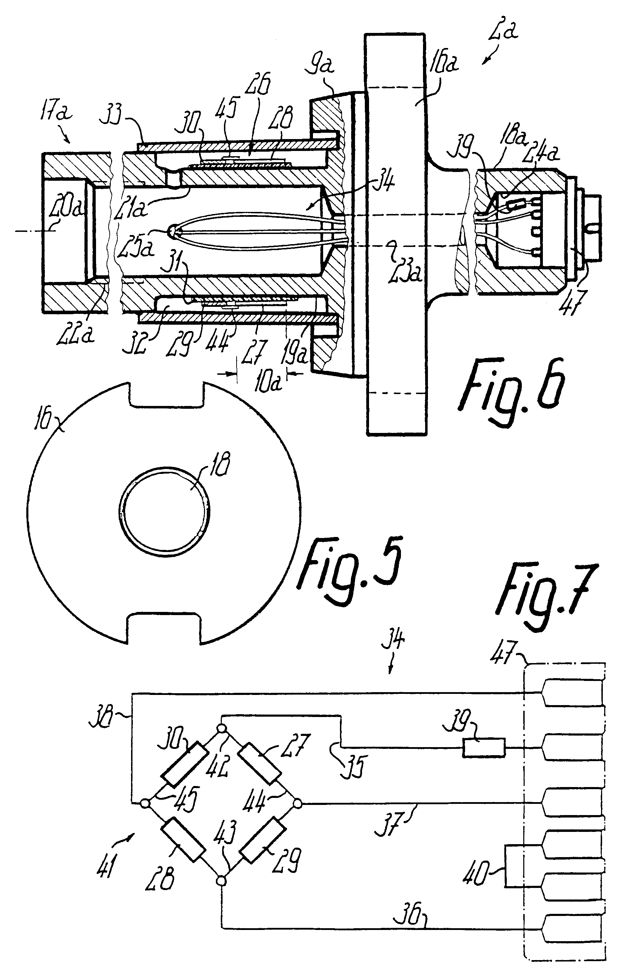

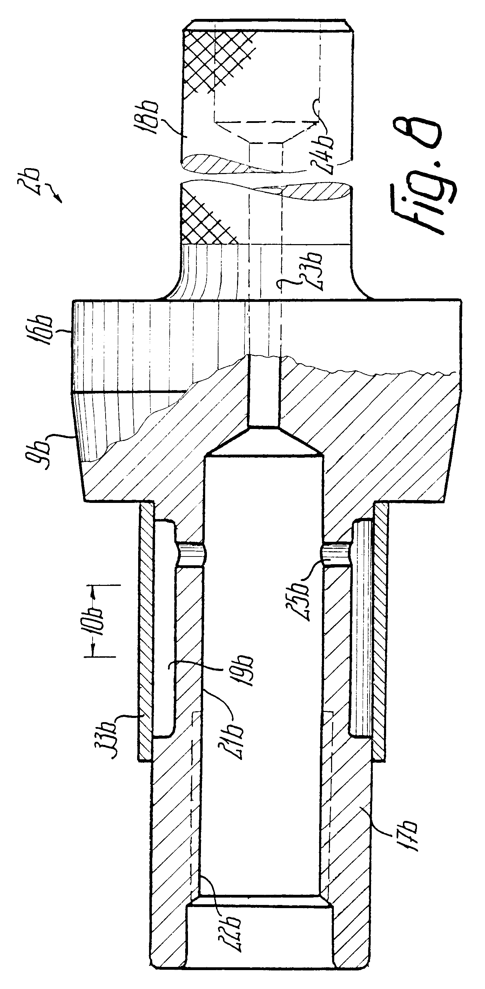

Zur feingraduierten bzw. stark übersetzten Umwandlung der elastischen Längendehnungen des Meßkörpers 10 ist ein Meßwertwandler 26 unmittelbar an dem Meßkörper 10 angebracht, der z.B. durch ein piezoelektrisches Element gebildet sein könnte. Im Falle des in Fig. 6 dargestellten Ausführungsbeispieles ist der mechanisch-elektrische Wegmeßwandler durch eine Gruppe von Dehnmeßstreifen 27 bis 30 gebildet, deren Schaltung aus Fig. 7 erkennbar ist. Zwei längliche Dehnmeßstreifen 27, 28 sind achsparallel zur Schaftachse 20a, einander diametral gegenüberliegend und hinsichtlich ihrer Enden in gemeinsamen, zur Schaftachse 20a rechtwinkligen Ebenen über ihre gesamte Länge gleichmäßig haftend mit dem reduzierten Außenumfang des Schaftabschnittes 17 verbunden, derart, daß ihre Längserstreckung die Länge des Meßkörpers 10a bestimmt.

Zwei weitere, insbesondere gleiche längliche Dehnmeßstreifen 29, 30 sind mit geringem Abstand hinter den aktiven Dehnmeßstreifen 27, 28 unmittelbar am genannten Außenumfang befestigt, jedoch quer bzw. rechtwinklig zu den Dehnmeßstreifen 27, 28, d.h. in Umfangsrichtung ausgerichtet, so daß nicht ihre Längs-, sondern ihre Breitenerstreckung in Richtung der Schaftachse 20a liegt. Benachbarte bzw. direkt miteinander verbundene aktive und quer liegende Dehnmeßstreifen sind in Umfangsrichtung gegeneinander, insbesondere um einen ihrer Gesamtzahl entsprechenden Quotienten von 360°, nämlich um 90°, versetzt, so daß vier gleichmäßig über den Umfang verteilte Dehnmeßstreifen vorgesehen sind, von denen zwei einander diametral gegenüber und in Umfangsrichtung quer liegen. Auch diese Meßstreifen 29, 30 sind, insbesondere mit derselben, sehr dünnen, jedoch elektrisch isolierenden Kleberschicht 31 über ihre gesamte Flächenerstreckung haftend, mit demselben, im Querschnitt bzw. Außendurchmesser reduzierten Schaftteil verbunden, wobei die Kleberschicht 31 zweckmäßig durch einen Heißkleber gebildet ist.

Die Dehnmeßstreifen, die aufgrund von kleinsten Längendehnungen signifikante Änderungen ihres elektrischen Widerstandes haben, liegen sowohl im Abstand vom vorderen wie auch vom hinteren Ende des im Außendurchmesser reduzierten Schaftteiles sowie im Axialabstand zu den Radialbohrungen 25a, die gemäß Fig. 6 hinter sämtlichen Dehnmeßstreifen vorgesehen sind. Die Länge der Dehnmeßstreifen liegt zweckmäßig in der Größenordnung von vier Millimetern, und die Breite mit etwa zwei Millimetern im Bereich der Hälfte der Länge, wobei die Breite gegenüber dem Umfang des Meßkörpers 10 nur einen sehr kleinen Bruchteil, nämlich beispielsweise etwa ein Fünfzigstel, beträgt.

Sämtliche Dehnmeßstreifen 27 bis 30 sind nach Art einer zum Ring geschalteten Serienschaltung bzw. Vollbrückenschaltung 41 über Verbindungsleitungen 42 bis 45 miteinander verbunden, die unmittelbar im Bereich des Außenumfanges des reduzierten Schaftteiles bzw. in der Umfangsnut 19a liegen. Der Meßwertwandler 26 bzw. die Dehnmeßstreifen 27 bis 30 sowie die Verbindungsleitungen 42 bis 45 sind in einer insbesondere mehrschichtige Einbettung 32 vollständig umschlossen und daher flüssigkeitsdicht abgedichtet eingebettet, so daß kein Öl, Bohrwasser oder dgl. eindringen kann. Diese Einbettung 32, die beispielsweise aus Silikon bestehen kann, füllt die freien Räume der Umfangsnut 19a vollständig aus, derart, daß ihr Außenumfang praktisch eine bündig anschließende Fortsetzung des Außenumfanges des übrigen Schaftabschnittes 17a bildet, wobei die Einbettung 32 ebenfalls aus elektrisch isolierendem Werkstoff besteht.

Am Außenumfang ist der Meßwertwandler 26 bzw. die Einbettung 32 durch eine dünnwandige rohrförmige Abdeckhülse geschützt, die einen Schutzmantel 33 bildet, welcher beiderseits der Umfangsnut 19a am Außenumfang des Schaftabschnittes 17a und ggf. am Außenumfang der Einbettung 32 durch Kleben festgelegt ist, wobei sich der Schutzmantel 33, der in eine Ringnut an der hinteren Stirnseite des Steilkegels 9a eingreifen kann, nach hinten nur geringfügig uber die Umfangsnut 19a hinaus erstreckt.

Die Vollbrückenschaltung 41 des Meßwertwandlers 26 ist an vier Anschlußleitungen 34 angeschlossen, die durch die Radialbohrungen 25a in die Schaftbohrung 21a und von dieser nach vorne durch die Axialbohrung 23a gebündelt zu einem kodierten Steckteil 47 geführt sind, der wenigstens teilweise in die Steckerbohrung 24a eingreift und in dieser durch Kleben oder dgl. festgelegt ist. Jede Anschlußleitung ist innerhalb der Steckerbohrung 24a an eine gesonderte Anschlußfahne des Steckerteiles 47 angeschlossen, der an seiner vorne liegenden Steckaufnahme für einen Gegenstecker 48 der Leitungsverbindung 4 für jede Anschlußleitung einen gesonderten Anschlußpol aufweist, vorzugsweise mehr als vierpolig, nämlich z.B. sechspolig, ausgebildet ist. Der Gegenstecker 48 weist eine entsprechende Anzahl von Polen auf, und die Leitungsverbindung 4 ist entsprechend vieladrig ausgebildet.

Wie Fig. 7 zeigt, ist an einen Lötstützpunkt der Verbindungsleitung 42 zwischen einem Ende eines aktiven Dehnmeßstreifens 27 und einem Ende eines in Umfangsrichtung um 90° versetzt liegenden, quer angeordneten Dehnmeßstreifens 30 eine erste Zuleitung als Speiseleitung 35 angeschlossen, wobei in diese Speiseleitung 35 zweckmäßig ein Abgleichwiderstand 39 zwischengeschaltet ist, der innerhalb der Steckerbohrung 24a liegen kann. An einen Lötstützpunkt der direkten Verbindungsleitung 43 zwischen den beiden anderen, ebenfalls in Umfangsrichtung sowie axial gegeneinander versetzt liegenden Dehnmeßstreifen 28, 29 ist die zweite Speiseleitung 36 angeschlossen. An einen weiteren Lötstützpunkt in einer weiteren Verbindungsleitung 44 zwischen zwei weiteren Enden der in Umfangsrichtung versetzten Dehnmeßstreifen ist eine erste Signalleitung 37 angeschlossen, während die zweite Signalleitung 38 an einen Lötstützpunkt der vierten Verbindungsleitung 45 angeschlossen ist, die zwischen den weiteren Anschlußenden der Dehnmeßstreifen 28 und 30 vorgesehen ist. Die Speiseleitungen und die Signalleitungen, die die Anschlußleitungen 34 bilden, sind an gesonderte Pole des Steckerteiles 47 angeschlossen. Die beiden verbleibenden Pole können über eine beispielsweise herausnehmbare Brücke 40 miteinander verbunden sein, so daß je nach verwendetem Gegenstecker eine gewünschte Umschaltung in der Erfassungseinrichtung 3, z.B. eine Meßbereichsumschaltung, hervorgerufen werden kann. Jeder Aufnehmer erhält zweckmäßig einen Null-Abgleich von beispielsweise 0,03 mV/V und/oder einen Signal-Abgleich von beispielsweise etwa 1,00 mV/V, so daß eine problemlose Austauschbarkeit gewährleistet ist.

Hinter den elektrisch leitenden Teilen ist die Schaftbohrung 21a zweckmäßig dicht verschlossen, so daß durch das Eingriffsglied 14a keine Flüssigkeit oder dgl. eindringen kann.

In den Figuren 6 und 8 sind ansonsten für einander entsprechende Teile die gleichen Bezugszeichen wie in Fig. 2, jedoch in Fig. 6 mit dem Index "a" und in Fig. 8 mit dem Index "b" verwendet, weshalb die zugehörigen Beschreibungsteile entsprechend gelten. Bei der Ausführungsform nach Fig. 8 ist kein über den Steilkegel 9b radial nach außen vorstehender Schaftflansch, sondern ein an den größten Außendurchmesser des Steilkegels 9b nach vorne anschließender Zylinderabschnitt 16b vorgesehen, so daß der Steilkegel 9b so bemessen werden kann, daß er im eingezogenen Zustand bis an das vordere Ende des Innenkonus 8 reicht oder sogar darüber geringfügig vorsteht. Des weiteren sind bei der Ausführungsform gemäß Fig. 8 die Radialbohrungen 25 axial vor dem wirksamen Meßabschnitt bzw. Meßkörper 10b vorgesehen. Der Schaftabschnitt 17b weist beiderseits der Umfangsnut 19b gleiche Außendurchmesser auf, wobei die Umfangsnut 19b bis auf wenige Millimeter an die hintere Stirnfläche des Steilkegels 9b reicht, so daß benachbart zum vorderen Ende der Umfangsnut 19b nur ein kurzer Zentrierbund für den Schutzmantel 33b gebildet ist, der an die hintere Stirnfläche des Steilkegels 9b anschlägt. Die Seitenflanken der Umfangsnut 19b gehen in deren Bodenfläche im Querschnitt zweckmäßig etwa viertelkreisförmig konkav ausgerundet über, um Kerbwirkungen zu vermeiden und eine hohe Standzeit des Prüfschaftes 2b zu gewährleisten. In den Figuren 2 und 8 sind der Meßwertwandler sowie dessen Verdrahtung und Einbettung nicht dargestellt, und in Fig. 2 ist außerdem der Schutzmantel nicht dargestellt.

Die elektronische Erfassungseinrichtung 3 weist ein Gehäuse 49 mit einem Anzeigefeld 50 an der Vorderseite auf, in welchem ein Wert für die jeweilige Einzugkraft der Spannvorrichtung 5 angegeben werden kann. Die Erfassungseinrichtung 3 ist mit einem Traggriff 51 tragbar und zweckmäßig so ausgebildet, daß sie über eine Netzleitung 52 mit Netzstrom und/oder mit in das Gehäuse 49 einsetzbaren Batterien bzw. Akkumulatoren mit Schwachstrom netzunabhängig betrieben werden kann. Die Erfassungseinrichtung 3 läßt sich gesondert vom Prüfschaft 2 in jedem geeigneten, bei der Prüfung gut einsehbaren Bereich aufstellen.

Der jeweilige Anzugsbolzen 15 weist einen Gewindeabschnitt 53 für den Eingriff in die Gewindebohrung 22 bzw. 22a bzw. 22b des Prüfschaftes, einen daran anschließenden Zentrierabschnitt für die hinter der Gewindebohrung liegende Zentrierbohrung und anschließend an diesen Zentrierabschnitt einen erweiterten Bund 54 auf, mit welchem der Anzugsbolzen 15 gegen die hintere Stirnfläche des Schaftabschnittes 17b verspannt wird. Hinter diesem Bund 54 ist der Anzugsbolzen 15 mit einer Eingriffsnut 55 für den Spanngreifer 13 versehen. Im Falle der Ausbildung nach Fig. 4 weist der das Eingriffsglied 14c bildende Anzugsbolzen 15c denselben Gewindeabschnitt 53c mit zugehörigem Zentrierabschnitt und denselben Bund 54c auf, jedoch ist das hintere Ende des Anzugsbolzens 15c beispielsweise statt mit einer Eingriffsnut mit einer Gewindebohrung für ein ein entsprechendes Außengewinde aufweisendes Verbindungsglied der Zugstange versehen.

## Patentansprüche

1. Einzugskraft-Meßgerät für Werkzeug-Spannvorrichtungen (5) von Werkzeugmaschinen, die eine Werkzeugaufnahme (7) für einen Werkzeugschaft und ein Spannglied (11) zur Spannung des Werkzeugschaftes an der Werkzeugaufnahme (7) aufweisen, mit einem an die Werkzeugaufnahme (7) angepaßten, für die Spannverbindung mit dem Spannglied (11) ausgebildeten Prüfschaft (2), welcher eine Abstützfläche zur Abstützung gegen die Spannkraft sowie ein Eingriffsglied (14, 14c) für das Spannglied (11) aufweist, wobei Mittel zur Ableitung eines jeweiligen Meßwertes für die Spannung der Spannvorrichtung (5) von wenigstens einer Wegänderung vorgesehen sind, dadurch gekennzeichnet, daß der Prüfschaft (2) als Meßglied (10) wenigstens einen Längsabschnitt aufweist, der sich unter der Einzugskraft zur Ableitung des jeweiligen Meßwertes einer Längendehnung unterwerfen läßt sowie zwischen der Abstützfläche und dem Eingriffsglied (14, 14c) liegt, wobei mindestens ein die Längendehnung wenigstens eines Längsabschnittes erfassender Meßwertwandler (26) vorgesehen ist.

2. Meßgerät nach Anspruch 1, dadurch gekennzeichnet, daß mindestens ein von der Spannkraft beeinflußtes Meßglied (10) zur Beeinflussung mindestens einer Erfassungseinrichtung (3) für die Spannkraft vorgesehen ist, und daß vorzugsweise mindestens ein Meßglied ein die Spannkraft unter mechanischer Verformung aufnehmender Meßkörper (10) ist.

3. Meßgerät nach Anspruch 1 oder 2, dadurch gekennzeichnet, daß wenigstens ein Meßglied (10) im wesentlichen in einer Schaftachse (20) des Prüfschaftes (2) liegt und/oder über seine Länge annähernd konstante Außen- und/oder Innenquerschnitte aufweist, daß vorzugsweise wenigstens ein Meßglied (10) ein Zugglied ist, daß insbesondere wenigstens ein Meßglied (10) ein in der Schaftachse (20) liegender Zug-Stababschnitt ist, daß vorzugsweie wenigstens ein Meßglied (10) mindestens teilweise als Hohlkörper ausgebildet ist, daß insbesondere wenigstens ein Meßglied (10) als Zylindermantel ausgebildet ist, dessen Wandungsdicke kleiner als sein Innendurchmesser bzw. die Hälfte davon ist und daß vorzugsweise mindestens ein Meßglied (10) bzw. ein einziger Meßkörper (10) mindestens teilweise einteilig mit dem Prüfschaft (2) ausgebildet ist, wobei der Meßkörper (10) insbesondere durch einen Längsabschnitt des Prüfschaftes (2) gebildet ist.

4. Meßgerät nach einem der vorhergehenden Ansprüche, dadurch gekennzeichnet, daß die Abstützfläche, wie ein Kegelabschnitt bzw. ein Steilkegel (9) für den Eingriff in einen Innenkonus (8), zur Abstützung gegen die Spannkraft an der Spindel-Wekzeugaufnahme (7) vorgesehen ist, daß insbesondere das Meßglied (10) im wesentlichen zwischen der Abstützfläche und dem Eingriffsglied (14) für das zur axialen Spannung ausgebildete Spannglied (11) liegt und daß vorzugsweise das Meßglied (10) nahe benachbart zur Abstützfläche (9) vorgesehen ist und/oder im Abstand vom Eingriffsglied (14) liegt.

5. Meßgerät nach einem der vorhergehenden Ansprüche, dadurch gekennzeichnet, daß ein Meßglied (10) gegenüber mindestens einem benachbarten Abschnitt des Prüfschaftes (2) im Querschnitt geschwächt ist, daß das Meßglied (10) insbesondere geringfügig geschwächt ist, und daß vorzugsweise ein das Meßglied (10) bildende Schaftabschnitt (17) im Bereich des Meßgliedes (10) nach Art einer flachen Umfangsnut (19) einen verringerten Außendurchmesser aufweist.

6. Meßgerät nach einem der vorhergehenden Ansprüche, dadurch gekennzeichnet, daß die Länge eines Meßgliedes (10) kleiner als seine Außenweite ist, daß diese Länge insbesondere kleiner als die Hälfte der Außenweite ist, daß vorzugsweise die Länge des Meßgliedes (10) nur einem Bruchteil der Länge eines zugehörigen Schaftabschnittes (17) entspricht, daß insbesondere die Länge des Meßgliedes (10) kleiner als ein Fünftel der Länge des Schaftabschnitts (17) ist und daß vorzugsweise das Meßglied (10) durch Eigenelastizität aus der mechanischen Spannkraft-Verformung elastisch rückstellend ausgebildet ist, wobei das Meßglied (10) insbesondere für eine maximale Spannkraft-Belastung unterhalb der elastischen Streckgrenze bemessen ist.

7. Meßgerät nach einem der vorhergehenden Ansprüche, dadurch gekennzeichnet, daß mindestens ein für die mechanische Spannkraft-Verformung wenigstens eines Meßgliedes (10) vorgesehener Meßwertwandler (26) ein mechanisch-elektrischer Meßwertwandler ist, daß vorzugsweise ein Meßwertwandler unmittelbar am Meßglied (10) an dessen Außenumfanmg angeordnet ist, daß inbesondere wenigstens ein Meßwertwandler (26) in einer Vertiefung, wie einer flachen Umfangsnut (19) vorgesehen ist, daß vorzugsweise ein Meßwertwandler (26) versenkt im Prüfschaft (2) angeordnet ist, daß insbesondere ein Meßwertwandler (26) im wesentlichen ganzflächig an der zugehörigen Oberfläche eines Meßgliedes (10) durch Klebung oder dgl. befestigt und/oder in einer Isolier-Einbettung (32) aus Kunstharz oder dgl. im wesentlichen vollständig eingeschlossen ist, und daß vorzugsweise ein Meßglied (10a) im Bereich eines Meßwertwandlers (26) bzw. einer Vertiefung (19a) mit einem Schutzmantel (33), wie einem elastisch verklebten sowie eine Einbettung (32) umgebenden Schutzrohr umgeben ist, wobei insbesondere das Meßglied (10a) durch einen Schaftabschnitt (17a) gebildet ist.

8. Meßgerät nach einem der vorhergehenden Ansprüche, dadurch gekennzeichnet, daß mindestens ein Meßwertwandler (26) durch wenigstens einen Dehnmeßstreifen (27 bis 30) gebildet ist, daß insbesondere mindestens zwei aktive Meßwertwandler (27, 28) um die Schaftachse (20a) verteilt im wesentlichen parallel zu dieser bzw. zur Zugrichtung angeordnet sind, daß vorzugsweise zwischen mindestens zwei aktiven Meßwertwandlern (27, 28) in einer Vollbrückenschaltung (41) zwei weitere, quer zur Schaftachse (20a) liegende, im wesentlichen gleiche Zwischen-Dehnmeßstreifen (29, 30) geschaltet sind, daß insbesondere der jeweilige Zwischen-Dehnmeßstreifen (29, 30) axial unmittelbar benachbart hinter dem jeweiligen aktiven Meßwertwandler und/oder gegenüber diesem in Umfangrichtung versetzt liegt und daß vorzugweise der bzw. die Meßwertwandler (26) nur über einen Teil der Länge einer Vertiefung (19) reichen, wobei insbesondere der jeweilige Meßwertwandler (26) von beiden Enden der Vertiefung einen Abstand hat, der etwa in der Größenordnung seiner Länge liegt.

9. Meßgerät nach einem der vorhergehenden Ansprüche, dadurch gekennzeichnet, daß elektrische Anschlußleitungen (34) für wenigstens einen Meßwertwandler (26) im wesentlichen innerhalb des Prüfschaftes (2a) in eine zentrale Axialbohrung (21a) annähernd bis zu einem vorderen, durch einen vorstehenden Griffschaft (18a) des Prüfschaftes (2a) gebildeten, Ende verlegt sind, daß Anschlußleitungen (34) insbesondere durch Radialbohrungen (25a) verlegt sind, und daß vorzugsweise elektrische Anschlußleitungen (34) für wenigstens einen Meßwertwandler (26) mit einem Anschlußteil einer mehrpoligen elektrischen Anschlußkupplung (46) verbunden sind, wobei insbesondere der Anschlußteil durch einen am vorderen Ende des Prüfschaftes (2a) liegenden Steckerteil (47) gebildet ist.

10. Meßgerät nach einem der vorhergehenden Ansprüche, dadurch gekennzeichnet, daß das Eingriffsglied (14) für das Spannglied (11) auswechselbar am Prüfschaft (2) befestigt ist, und daß vorzugsweise ein Eingriffsteil (53, 53c) in eine Gewindebohrung (22) am hinteren Ende des Prüfschaftes (2) einsetzbar ist.

11. Meßgerät nach einem der Ansprüche 2 bis 10, dadurch gekennzeichnet, daß mindestens eine Erfassungseinrichtung (3) durch ein gesondertes Meßgerät gebildet ist, das über eine flexible Leitungsverbindung (4) mit dem Prüfschaft (2) zu verbinden ist, daß inbesondere eine Erfassungseinrichtung (3) Bestandteil eines für die Aufnahme wenigstens eines Prüfschaftes ausgebildeten Koffers oder dgl. ist, daß vorzugsweise eine Erfassungseinrichtung (3) eine Anzeigeeinrichtung aufweist und daß inbesondere eine Erfassungseinrichtung (3) lösbar mit dem Prüfschaft (2) zu verbinden ist.

## Claims

1. Drawing force measuring device for tool clamping devices (5) of machine tools, which have a tool receptacle (7) for a tool shank and a clamping member (11) for clamping the tool shank to the tool receptacle (7), with a test shank (2) adapted to the tool receptacle (7) and constructed for clamping connection to the clamping member (11) and which has a support surface for supporting against the clamping force and an engagement member (14, 14c) for the clamping member (11), there being means for deriving a measured value for the clamping of the clamping device (5) from at least one path change, characterized in that the test shank (2) as the measuring member (10) has at least one linear portion, which under the drawing force can be subject to a linear extension for deriving the particular measured value and being located between the supporting surface and the engagement member (14, 14c) and there is at least one transducer (26) detecting the linear extension of at least one linear portion.

2. Measuring device according to claim 1, characterized in that at least one measuring member (10) influenced by the clamping force is provided for influencing at least one detecting device (3) for the clamping force and that preferably at least one measuring member is a measuring body (10) absorbing the clamping force under mechanical deformation.

3. Measuring device according to claim 1 or 2, characterized in that at least one measuring member (10) is located essentially in a shank axis (20) of the test shank (2) and/or over its length has approximately constant outside and/or inside cross-sections, that preferably at least one measuring member (10) is a tension member, that in particular at least one measuring member (10) is a tension-rod portion located in the shank axis (20), that preferably at least one measuring member (10) is at least partly constructed as a hollow body, that in particular at least one measuring member (10) is constructed as a cylindrical casing, whose wall thickness is smaller than its internal diameter or half thereof and that preferably at least one measuring member (10) or a single measuring body (10) is at least partly constructed integrally with the test shank (2), the measuring body (10) in particular being formed by a longitudinal portion of the test shank (2).

4. Measuring device according to one of the preceding claims, characterized in that the supporting surface, such as a conical portion or a steep taper (9) for engagement in an internal cone (8), is provided for supporting against the clamping force on the spindle tool receptacle (7), that in particular the measuring member (10) is substantially positioned between the supporting surface and the engagement member (14) for the clamping member (11) constructed for axial clamping and that preferably the measuring member (10) is close to the supporting surface (9) and/or spaced from the engagement member (14).

5. Measuring device according to one of the preceding claims, characterized in that a measuring member (10) is cross-sectionally reduced at least with respect to an adjacent portion of the test shank (2), that the measuring member (10) is in particular slightly weakened and that preferably a shank portion (17) forming the measuring member (10) in the vicinity of the latter has a reduced external diameter in the manner of a flat circumferential groove (19).

6. Measuring device according to one of the preceding claims, characterized in that the length of the measuring member (10) is smaller than its external width, that said length is in particular smaller than half the external width, that preferably the length of the measuring member (10) is only a fraction of the length of an associated shank portion (17), that in particular the length of the measuring member (10) is smaller than 1/5 of the length of the shank portion (17) and that preferably the measuring member (10) is constructed so as to be elastically resilient as a result of inherent elasticity from the mechanical clamping force deformation, the measuring member (10) is in particular below the tensile yield strength for a maximum clamping force loading.

7. Measuring device according to one of the preceding claims, characterized in that there is at least one transducer (26) in the form of a mechanical-electrical transducer for the mechanical clamping force deformation of at least one measuring member (10), that preferably a transducer is located directly on the outer circumference of the measuring member (10), that in particular at least one transducer (26) is provided in a depression, such as a shallow circumferential groove (19), that preferably a transducer (26) is countersunk in the test shank (2), that particularly a transducer (26) is fixed by adhesion or the like in substantially whole-surface manner to the associated surface of a measuring member (10) and/or is substantially completely enclosed in an insulating embedding (32) of synthetic resin or the like and that preferably a measuring member (10a) in the vicinity of a transducer (26) or a depression (19a) is surrounded by a protective casing (33), such as an elastically bonded protective tube surrounding an embedding (32) and in particular the measuring member (10a) is formed by a shank portion (17a).

8. Measuring device according to one of the preceding claims, characterized in that at least one transducer (26) is formed by at least one wire strain gauge (27 to 30), that in particular at least two active transducers (27, 28) are distributed about the shank axis (20a) substantially parallel thereto or to the tension direction, that preferably between at least two active transducers (27, 28) are connected in a full bridge circuit (41) two further substantially identical wire strain gauges (29, 30) positioned transversely to the shank axis (20a), that in particular the intermediate wire strain gauges (29, 30) are axially directly adjacent behind the active transducer and/or circumferentially displaced with respect thereto and that preferably the transducer or transducers (26) only extend over part of the length of a depression (19) and in particular the particular transducer (26) has a spacing from the two ends of the depression which is roughly the same as its length.

9. Measuring device according to one of the preceding claims, characterized in that electric connecting lines (34) for at least one transducer (26) are placed within the test shank (2a) in a central axial hole (21a) approximately up to a front end formed by a projecting grip shank (18a) of the test shank (2a), that connecting lines (34) are in particular placed through radial holes (25a) and that preferably electrical connecting lines (34) for at least one transducer (26) are connected to a connecting part of a multipole electric connecting coupling (46) and in particular the connecting part is formed by a plug part (47) located on the front end of the test shank (2a).

10. Measuring device according to one of the preceding claims, characterized in that the engagement member (14) for the clamping member (11) is interchangeably fixed to the test shank (2) and that preferably an engagement part (53, 53c) can be inserted in a tapped hole (22) on the rear end of the test shank (2).

11. Measuring device according to one of the claims 2 to 10, characterized in that at least one detecting device (3) is formed by a separate measuring device, which is to be connected by means of a flexible line connection (4) to the test shank (2), that in particular a detecting device (3) is a component of a case or the like constructed for receiving at least one test shank, that preferably a detecting device (3) has an indicating device and that in particular a detecting device (3) is detachably connected to the test shank (2).

## Revendications

1. Appareil de mesure de la force d'introduction dans des dispositifs (5) de serrage d'outils de machines-outils qui comprennent un logement d'outillage (7) pour une tige d'outil, ainsi qu'un organe de serrage (11) conçu pour serrer la tige d'outil contre le logement d'outillage (7), présentant une tige de contrôle (2) qui est adaptée au logement d'outillage (7), est conçue pour la liaison par serrage avec l'organe de serrage (11) et est munie d'une surface d'appui pour prendre appui en s'opposant à la force de serrage, ainsi que d'un organe (14, 14c) de venue en prise avec l'organe de serrage (11), des moyens étant prévus pour dériver, d'au moins une variation de course, une valeur mesurée respective se rapportant au serrage du dispositif de serrage (5), caractérisé par le fait que la tige de contrôle (2) comporte, en tant qu'organe mesureur (10), au moins un segment longitudinal qui peut être soumis à une extension linéaire sous l'effet de la force d'introduction, en vue de dériver la valeur mesurée considérée, et qui est interposé entre la surface d'appui et l'organe (14, 14c) de venue en prise, au moins un convertisseur (26) de valeurs mesurées étant prévu pour détecter l'extension linéaire d'au moins un segment longitudinal.

2. Appareil de mesure selon la revendication 1, caractérisé par le fait qu'au moins un organe mesureur (10), influencé par la force de serrage est prévu pour influencer au moins un système (3) de détection de la force de serrage : et par le fait que, de préférence, au moins un organe mesureur est un corps mesureur (10) absorbant la force de serrage avec déformation mécanique.

3. Appareil de mesure selon la revendication 1 ou 2, caractérisé par le fait qu'au moins un organe mesureur (10) est disposé, pour l'essentiel, selon un axe (20) de la tige de contrôle (2) et/ou présente des sections transversales extérieure et/ou intérieure approximativement constantes sur sa longueur ; par le fait que de préférence, au moins un organe mesureur (10) est un organe de traction ; par le fait que, en particulier, au moins un organe mesureur (10) est un tronçon d'un barreau de traction disposé selon l'axe (20) de la tige ; par le fait que, de préférence, au moins un organe mesureur (10) est au moins partiellement réalisé sous la forme d'un corps creux ; par le fait que, en particulier, au moins un organe mesureur (10) est réalisé sous la forme d'une enveloppe cylindrique dont l'épaisseur de paroi est respectivement plus petite que son diamètre intérieur, ou que la moitié de celui-ci ; et par le fait que, de préférence, au moins un organe mesureur (10) ou un unique corps mesureur (10) est respectivement réalisé, au moins en partie, d'une seule pièce avec la tige de contrôle (2), le corps mesureur (10) étant notamment formé par un segment longitudinal de la tige de contrôle (2).

4. Appareil de mesure selon l'une des revendications précédentes, caractérisé par le fait que la surface d'appui, respectivement matérialisée par une région tronconique ou par un tronc de cône (9) à forte pente destiné à pénétrer dans un tronc de cône intérieur (8), est prévue sur le logement d'outillage (7) de la broche, afin d'assurer l'appui en s'opposant à la force de serrage ; par le fait que l'organe mesureur (10) se trouve en particulier, pour l'essentiel, entre la surface d appui et l organe (14) de venue en prise avec l'organe de serrage (11) conçu pour le serrage axial ; et par le fait que, de préférence, l'organe mesureur (10) est prévu au voisinage intime de la surface d appui (9) et/ou se trouve à distance de l'organe (14) de venue en prise.

5. Appareil de mesure selon l'une des revendications précédentes, caractérisé par le fait qu'un organe mesureur (10) présente un rétrécissement de section transversale par rapport à au moins un segment attenant de la tige de contrôle (2) ; par le fait que l'organe mesureur (10) accuse notamment un léger rétrécissement ; et par le fait que, de préférence, un segment (17) de la tige formant l'organe mesureur (10) comporte, dans la région dudit organe mesureur (10), un diamètre extérieur réduit se présentant comme une saignée circonférentielle aplatie (19).

6. Appareil de mesure selon l'une des revendications précédentes, caractérisé par le fait que la longueur d'un organe mesureur (10) est plus petite que sa largeur extérieure ; par le fait que cette longueur est notamment inférieure à la moitié de la largeur extérieure ; par le fait que, de préférence, la longueur de l'organe mesureur (10) correspond uniquement à une fraction de la longueur d'un segment associé (17) de la tige ; par le fait que, en particulier, la longueur de l'organe mesureur (10) est inférieure à un cinquième de la longueur du segment (17) de la tige ; et par le fait que, de préférence, l'organe mesureur (10) est réalisé pour reprendre élastiquement son état par élasticité propre, à partir de sa déformation mécanique sous l'effet de la force de serrage, l'organe mesureur (10) étant notamment dimensionné pour une contrainte maximale par la force de serrage qui est située au-dessous de la limite de l'allongement élastique.

7. Appareil de mesure selon l'une des revendications précédentes, caractérisé par le fait qu'au moins un convertisseur (26) de valeurs mesurées, prévu pour la déformation mécanique due à la force de serrage et concernant au moins un organe mesureur (10), est un convertisseur électromécanique de valeurs mesurées ; par le fait que, de préférence, un convertisseur de valeurs mesurées est placé directement sur l'organe mesureur (10), sur le pourtour extérieur de ce dernier ; par le fait que, en particulier, au moins un convertisseur (26) de valeurs mesurées est prévu dans un renfoncement tel qu'une saignée circonférentielle aplatie (19) ; par le fait que, de préférence, un convertisseur (26) de valeurs mesurées occupe une position encaissée dans la tige de contrôle (2) ; par le fait que, en particulier, un convertisseur (26) de valeurs mesurées est fixé pour l'essentiel par toute sa surface à la surface associée d'un organe mesureur (10), par collage ou par un procédé similaire, et/ou est noyé, pour l'essentiel intégralement, dans un enrobage intégré isolant (32) en résine synthétique ou en un matériau analogue ; et par le fait que, de préférence au voisinage respectif d'un convertisseur (26) de valeurs mesurées ou d'un renfoncement (19a), un organe mesureur (10a) est entouré d'une enveloppe protectrice (33) telle qu'un tube protecteur collé élastiquement et entourant un enrobage intégré (32), l'organe mesureur (10a) étant notamment formé par un segment (17a) de la tige.

8. Appareil de mesure selon l'une des revendications précédentes, caractérisé par le fait qu'au moins un convertisseur (26) de valeurs mesurées est formé par au moins une jauge extensométrique (27 à 30) ; par le fait que, en particulier, au moins deux convertisseurs actifs (27, 28) de valeurs mesurées sont agencés avec répartition autour de l'axe (20a) de la tige, pour l'essentiel parallèlement à celui-ci ou à la direction de la traction ; par le fait que, de préférence, deux autres jauges extensométriques intercalaires (29, 30), pour l'essentiel identiques et situées transversalement par rapport à l'axe (20a) de la tige, sont branchées dans un circuit (41) à montage en pont intégral, entre au moins deux convertisseurs actifs (27, 28) de valeurs mesurées ; par le fait que, en particulier, la jauge extensométrique intercalaire (29, 30) considérée jouxte directement dans le sens axial le convertisseur actif considéré de valeurs mesurées, derrière ce dernier, et/ou en est décalée dans le sens périphérique ; et par le fait que, de préférence, le ou les convertisseur(s) (26) de valeurs mesurées s'étend(ent) uniquement sur une partie de la longueur d'un renfoncement (19), le convertisseur considéré (26) de valeurs mesurées étant notamment espacé, des deux extrémités du renfoncement, d'une distance qui est à peu près de l'ordre de sa longueur.

9. Appareil de mesure selon l'une des revendications précédentes, caractérisé par le fait que des conducteurs électriques de raccordement (34), affectés à au moins un convertisseur (26) de valeurs mesurées, sont posés pour l'essentiel à l'intérieur de la tige de contrôle (2a), dans un canal axial central (21a), approximativement jusqu'à une extrémité antérieure formée par un fût saillant de préhension (18a) de ladite tige de contrôle (2a) ; par le fait que des conducteurs de raccordement (34) traversent notamment des trous radiaux (25a) ; et par le fait que, de préférence, des conducteurs électriques de raccordement (34) affectés à au moins un convertisseur (26) de valeurs mesurées sont reliés à une pièce de connexion d'un connecteur électrique multipolaire (46), la pièce de connexion étant notamment formée par une partie enfichable (47) située à l'extrémité antérieure de la tige de contrôle (2a).

10. Appareil de mesure selon l'une des revendications précédentes, caractérisé par le fait que l'organe (14) de venue en prise de l'organe de serrage (11) est fixé à la tige de contrôle (2) avec faculté de remplacement ; et par le fait que, de préférence, une partie (53, 53c) de venue en prise peut être insérée dans un trou taraudé (22), à l'extrémité postérieure de la tige de contrôle (2).

11. Appareil de mesure selon l'une des revendications 2 à 10, caractérisé par le fait qu'au moins un système de détection (3) est formé par un appareil de mesure distinct, devant être relié à la tige de contrôle (2) par l'intermédiaire d'une jonction (4) par conducteur flexible ; par le fait que, en particulier, un système de détection (3) fait partie d'une mallette ou pièce similaire, conçue pour recevoir au moins une tige de contrôle ; par le fait que, de préférence, un système de détection (3) présente un dispositif d'affichage ; et par le fait que, en particulier, un système de détection (3) doit être relié de manière libérable à la tige de contrôle (2).
